# EUROPEAN PATENT APPLICATION

(11) **EP 1 887 502 A2**
(43) Date of publication of application: **13.02.2008**
(21) Application number: 07013860.7
(22) Date of filing: 16.07.2007
(51) Int. Cl.: G06Q 10/00

(54) **System for controlling the handling of pallets in a circuit of users**

(30) Priority: 08.08.2006 IT MN20060053
(71) Applicant: Donelli, Giambattista, 46010 Curtatone (MN) (IT)
(72) Inventor: Donelli, Giambattista, 46010 Curtatone (MN) (IT)
(74) Representative: Alagem Modiano, Lara S.

(57) **Abstract**

A system for controlling the handling of pallets in a circuit of users, each pallet (1) comprising digital identification means (1a; 9a) and each user that belongs to the circuit being provided with at least one reader (4,5) of the means which is adapted to transmit the received data to a local unit (6,7) which is present at the user's premises (2,3), a central unit (8) being present which is connected to each local unit (6,7) for collecting and exchanging data with the units.

## Description

The present invention relates to a system for controlling the handling of pallets in a circuit of users.

It is known that the use of pallets is currently widespread; such pallets are provided in the form of wooden platforms, which comprise a deck onto which the goods to be transported are loaded, the deck being provided with underlying cross-members which define empty spaces arranged so as to accommodate the insertion of the prongs of fork-lift trucks.

In a typical situation for the use of pallets, it can be said that a first company loads good to be shipped onto the pallets purchased from manufacturers and entrusts the loaded pallets to companies, known as forwarding agents, which take care of their transport to the recipients.

Once arrived at their destination, the loaded pallets are unloaded from the means that provided their transport and the forwarding agent loads new pallets, which can be empty or laden with goods for other recipients, thus starting a complex round of handlings which will return to the first company pallets, which merely by chance will be the very ones that left the company, only after a number of unpredictable events.

Currently, companies which own pallets gradually see their inventory decrease, possibly until they disappear, without being able to know the reason why, and therefore the aim of the present invention is to provide a control system which is capable of providing assurance to all the pallet users that belong to a circuit regarding the preservation of their inventory of pallets.

This aim is achieved by a system for controlling the handling of pallets in a circuit of users, according to the invention, characterized in that each pallet comprises digital identification means and in that each user that belongs to the circuit is provided with at least one reader of said means which is adapted to transmit the received data to a local unit which is present at the user's premises, a central unit being present which is connected to each local unit for collecting and exchanging data with said units.

Further characteristics and advantages of the present invention will become better apparent from the description of two preferred but not exclusive embodiments of the invention, illustrated by way of non-limiting example in the accompanying drawings, wherein:
Figure 1 is a schematic view of a working situation of the system according to the invention;
Figure 2 is a view of a detail of a pallet according to a variation.

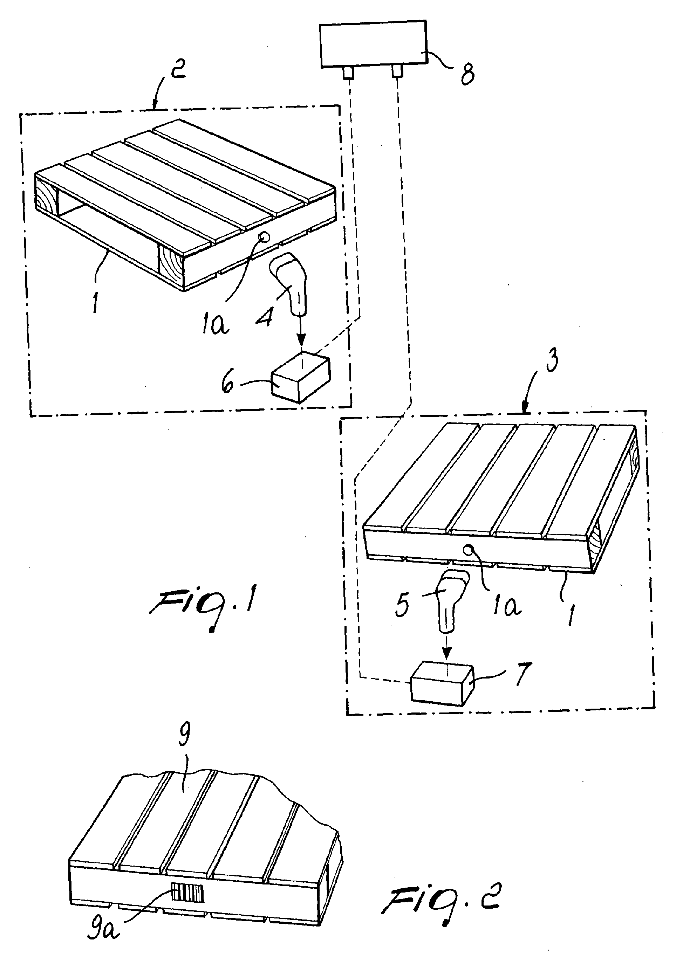

With reference to Figure 1, the reference numeral 1 designates a pallet, which can be imagined to be laden with goods, not shown in the figure for simplicity, which must be transported from an area 2 located within the premises of the selling company to an area 3 located within the premises of the client that purchased the goods.

The pallet 1 belongs to the selling company, and according to an important feature of the invention it is provided with a digital identification means such as a chip, designated by the reference numeral 1a, which is adapted to be read by radio frequency and is inserted nonremovably within a cross-member; said chip constitutes a means for unique digital identification of the pallet.

The companies whose premises include the areas 2 and 3 belong to a circuit of users in which each user is equipped with at least one reader of the means for digital identification of the individual pallets, such as 4 for the area 2 and 5 for the area 3, which is capable of transmitting the acquired data wirelessly to a local unit, with which each individual user of the circuit is also equipped; therefore reference numerals 6 and 7 designate the local units that are present in the areas 2 and 3 and are designed to receive the data of the reader 4 and of the reader 5, respectively.

All the local units 6 and 7 with which the individual users that belong to the circuit are equipped are further provided with means for remotely accessing a central unit 8 which collects and exchanges data with said units.

When the forwarding agent entrusted with the transport of the pallet 1 from the area 2 to the area 3 arrives, he takes the reader 4, which is provided to him by the storekeeper who manages the area 2, and after enabling it in the software of the system, at the same time accrediting himself as a forwarding agent, he reads the identification chip 1a.

By doing so, the forwarding agent takes charge of the pallet 1, and an outgoing transaction is created which is complete with all the necessary data, processed by the software of the local unit 6, which is transmitted to the central unit 8.

Upon arrival at the area 3, the storekeeper entrusted with managing this area provides the forwarding agent with the reader 5, which is appropriately enabled to read the chip 1a.

The acquired data is transmitted to the local unit 7 and from there to the central unit 8, which can check the match of the acquired data in output from the reader 4 and in input to the reader 5, thus closing the transaction, with discharge of the pallet 1 by the forwarding agent and acceptance by the store of the area 3.

In departing from the area 3, the forwarding agent can pick up goods-laden or empty pallets that are present in said area to deliver them to any recipient, and of course each of these pallets will undergo the processing described with reference to the pallet 1.

For the sake of completeness, it is specified that this processing can be changed if the storekeeper of the area 2 performs a first reading of the chip 1a and the forwarding agent subsequently performs a check, and the same applies for the procedures within the area 3.

In conclusion, the important aspect to be considered is the fact that the adoption of the system according to the invention allows to know at all times the situation of each pallet in the complex round of handlings that occur within the circuit, thus protecting the rights of each user of the circuit on the pallets that belong to said user.

The described invention is susceptible of numerous modifications and variations, all of which are within the scope of the appended claims: thus, for example, the means for digital identification of each pallet can comprise a bar code such as the one designated by the reference numeral 9a applied to the pallet 9 shown in Figure 2.

The disclosures in Italian Patent Application No. MN2006A000053 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for controlling the handling of pallets in a circuit of users, **characterized in that** each pallet (1) comprises digital identification means (1a; 9a) and **in that** each user that belongs to the circuit is provided with at least one reader (4, 5) of said means which is adapted to transmit the received data to a local unit (6,7) which is present at the user's premises (2,3), a central unit (8) being present which is connected to each local unit (6,7) for collecting and exchanging data with said units.

2. The system according to claim 1, **characterized in that** the digital identification means (1a) with which each pallet (1) is equipped comprise a chip which is adapted to be read via radio frequency.

3. The system according to claim 1, **characterized in that** the digital identification means (1a) with which each pallet is equipped comprise a bar code (9a).

4. The system according to one or more of the preceding claims, **characterized in that** each local unit (6,7) is provided with means for remotely accessing the central unit (8).

5. The system according to one or more of the preceding claims, **characterized in that** each reader (4,5) is provided with means for wireless transmission of the acquired data to the corresponding local unit (6,7).
